# EUROPEAN PATENT SPECIFICATION

(11) **EP 1 626 860 B1**
(45) Date of publication and mention of the grant of the patent: **21.03.2007**
(21) Application number: 04748579.2
(22) Date of filing: 14.05.2004
(51) Int. Cl.: B29C 70/54

(54) **METHOD FOR THE MANUFACTURE OF A REINFORCED PLASTIC PRODUCT**
VERFAHREN ZUR HERSTELLUNG EINES VERSTÄRKTEN PRODUKTES
PROCEDE DE FABRICATION D'UN PRODUIT EN PLASTIQUE RENFORCE

(30) Priority: 14.05.2003 NL 1023425
(43) Date of publication of application: 22.02.2006
(73) Proprietor: TNO Bedrijven B.V., 2628 VK Delft (NL)
(72) Inventor: VAN HERPT, Edwin, Cornelus, Felix, Carolus, NL-5053 AT Goirle (NL)
(74) Representative: Winckels, Johannes Hubertus F.
(86) International application number: PCT/NL2004/000334
(87) International publication number: WO 2004/101259

(56) References cited:
- WO-A-01/02146
- DE-A- 10 105 976
- US-A1- 2002 155 186

## Description

### Field of the invention

The invention relates to a method for the manufacture of a reinforced plastic product. More particularly, the invention concerns the manner of distribution of liquid plastic material over and into a reinforcement package during the manufacturing process. Still more particularly, the invention concerns the manufacture of products utilizing a process referred to as Vacuum Assisted Resin Injection (VARI), briefly referred to as resin injection. This method comprises the following steps:
- placing a reinforcement package of, for instance, glass or carbon fiber web against a molding wall, for instance an inner or outer mold;
- installing a supply for liquid plastic material, for instance synthetic resin;
- covering the reinforcement package, inclusive of the installed supply, substantially gas- or air-tightly, for instance by plastic foil;
- adjusting the pressure in the space between the molding wall and the air-tight covering to a first value d1 ("evacuation"), which pressure is so much lower than the pressure outside that space that the liquid plastic material flows through the reinforcement package-filled space between the covering and the molding wall. Owing to the difference between the ambient pressure (d0) and the low pressure d1 in the reinforcement package, the liquid plastic material is sucked or "injected" into the reinforcement package.

### Background of the invention

For a proper spread of the liquid plastic material over a dry fiber package during injection, runner channels are necessary. It is known to form these channels, for instance, by placing metal or plastic spirals or plastic profiles between the reinforcement package and the air-tight covering. When a vacuum is applied between air-tight covering and molding wall, in other words, upon evacuation of the reinforcement package, the spirals will create an open space. Through this space, the liquid plastic material can simply be spread over the reinforcement package over large distances. Because the distance that the liquid plastic material can travel through a reinforcement package is limited, the runner pattern is often complex in the case of large composite products, such as yachts. Large parts of yachts, etc., can be "visible" parts which should absolutely not exhibit any defects. For these parts, a Class A surface is required.

One of the major drawbacks of the known runner channels is their delineation on the outside (on the other side than where the runner channel is provided) of the composite product after it is cleared from the mold. One of the causes of this is the local resin-rich spot directly next to the runner channel and the depression of the runner channel into the reinforcement package. Further, providing such runner channels (not being reusable owing to their nature) requires extra material and labor.

United States patent application 2002/0155186 discloses a method for the manufacture of a reinforced plastic product according to the preamble of claim 1, in which between the air-tight covering and the reinforcement package a relatively stiff sheetlike part is placed, which on the side of the reinforcement package is provided with a large number of closely spaced mutually parallel grooves, connected to a supply for plastic material, forming channel parts and having a relatively small cross section relative to conventional runner channels. After placing and covering the sheetlike part with a further foil layer, the pressure in the space between the molding wall and the air-tight covering is adjusted to a first value d1, which is lower than the ambient pressure, after which the pressure within the channel parts is adjusted to a second value d2, which is lower than the first value d1. This has as a result that the air-tight covering is sucked into the channel parts, so that regularly over the entire surface of the reinforcement package, temporary channels are formed for soaking the reinforcement package with liquid plastic material uniformly over the entire surface. After the reinforcement package has been soaked by the liquid plastic material to a sufficient extent, the pressure in the small channels is adjusted to a third value d3, which is equal to or greater than the first value d1, so that the air-tight covering within the channel parts is pushed back in the direction of the reinforcement package again and hence the temporary channels disappear again. After curing, first the extra foil layer and the sheetlike part are removed, after which the air-tight covering is removed.

This known method is intended for manufacturing not unduly large plastic products of a simple shape, that is, in view of the stiff sheetlike part used, substantially straight wall surfaces. The method is hardly if at all suitable for manufacturing large products of a more complex shape, such as hulls of yachts, etc. In the case of that kind of products, no use can be made of the "Fastrac"® channel parts mentioned in the known method, which are temporarily placed over the air-tight covering to obtain temporary runner channels. Moreover, in the case of such large products, applying the air-tight covering - typically a flexible foil - in the traditional manner takes much time and the covering material can only be used a single time, which entails rather a lot of waste.

### Object of the invention

One object of the invention is to provide a method with which relatively large plastic products, such as hulls of yachts, on which stringent quality requirements as regards strength and appearance are imposed, can be manufactured in a relatively simple manner.

Another object of the invention is to realize this with the least possible labor and material, more particularly with mold means to be used more than once.

### Summary of the invention

This is achieved, according to the invention, in a method as referred to above, in that the provisions are designed as at least one branched or unbranched gutter-shaped channel part, which, with an open gutter side facing the air-tight covering, is non-detachably fixed thereto, the arrangement being preferably such that upon adjusting the pressure to the second value, at least one runner channel is formed with a total open gutter-side surface that is smaller than half of the surface of the reinforcement package, or, that the surface of the reinforcement package that is not to be covered directly by the at least one runner channel is at least twice as large as the surface of the reinforcement package that is to be covered directly by the at least one runner channel. Through these features, a pattern of runner channels can be created, having, compared with the known small channels, a lesser number as well as a greater cross section and more robust shape, with which in a relatively short time a relatively large surface can be covered and soaked, while those runner channels, after soaking the reinforcement package to a sufficient extent, can be pushed away substantially without leaving a trace, thus resulting in an optimum appearance.

What is more, owing to the non-detachable connection of the channel parts to the air-tight covering, an additional covering foil can be omitted and the air-tight covering with channel parts can be reused. Also, by this manner of working, it is possible to realize a variety of curved surfaces without any problems.

Compared with the known method, which involves a large number of fine channels distributed over the entire surface, the present method involves a lesser number of runner channels, though more robust. This provides the further advantage that these runner channels can, if desired, be steered independently of each other during injection, so that the process can be controlled and adjusted depending on the course of the process.

The invention further relates to an air-tight covering to be used with a method described in the foregoing.

In order to avoid creasing during vacuum suction, the air-tight covering is preferably premodeled in conformity with the shape of the molding wall - of the inner or outer mold of the product (for instance yacht hull) - and the channel parts are then non-detachably connected with that premodeled covering. Such a premodeled covering, including channel parts, is moreover suitable to be reused several times for the production of similar products, for instance a series of identical or substantially identical yacht hulls.

The manufacture of such a preformed and reusable covering with channel parts can be successfully realized in a relatively simple manner if a layer of more of less liquid starting material, which after curing forms an elastic material, is applied to the molding wall and, before, during, or after curing of that layer of starting material, the at least one channel part is connected therewith, after which the cured layer of starting material, together with the at least one channel part non-detachably connected therewith, is cleared from the molding wall to be subsequently used as an elastic, premodeled air-tight covering of the reinforcement package.

### Brief description of the drawings

Referring to an embodiment represented in the drawings, though exclusively by way of non-limiting example, the method according to the invention will presently be further elucidated.

Figs. 1a-d show different stages of the method according to the invention.

Fig. 2 shows schematically an overview of a system in which the method can be carried out.

### Detailed description of the drawings

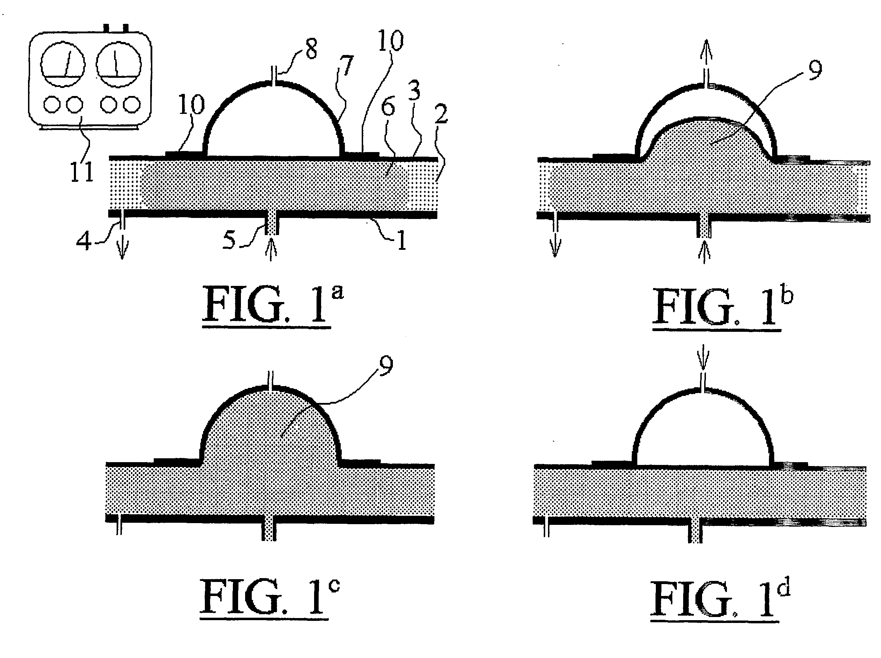

Figs. 1a-d show a part of a molding wall 1 of an outer or inner mold in which the respective product is made. Against the molding wall 1, a reinforcement package 2, for instance a glass fiber or carbon fiber web, has been placed, which is subsequently covered with an air-tight covering 3, which should be gas- or air-tight to the extent that the reinforcement package 2, and the space between the air-tight covering 3 and the molding wall 1, respectively, can be evacuated to a relatively low pressure d1 by means of a pump system 11, connected to an opening 4. Via a supply 5, liquid plastic material 6, for instance a mixture of polyester resin and hardener - hereinafter also called synthetic resin - is injected in that the pressure d1 in the space between the molding wall 1 and the air-tight covering 3 is so low that the pressure d0 - for instance normal ambient pressure or a higher pressure - forces the liquid plastic material 6 into the reinforcement package-filled space between the air-tight covering 3 and the molding wall 1.

Against the outside of the air-tight covering 3, a half-open channel part 7 is arranged, for instance through gluing of glue surfaces 10 against that air-tight covering 3. Via an opening 8, connected to pressure control means, in this case the pump system 11, the pressure within the channel part 7 can be adjusted to a value d2, which is lower than the pressure d1 in the space of the reinforcement package 2. As a result, the air-tight covering 3 will be sucked into the channel part 7, as can be seen in Fig. 1b and Fig. 1c. Thus, also the so created space 9 is filled with the liquid synthetic resin still being supplied, and it fulfils the function of runner channel improving the throughflow of the liquid resin.

After the liquid resin has filled the space 2 between the covering and the molding wall, including the reinforcement package filling that space, then, as illustrated by Fig. 1d, the pump connected to the channel part 7 via the opening 8 adjusts the pressure in the channel part 7 to a value d3, greater than d2, so that the air-tight covering 3 within the channel part 7 is pressed against the fiber package 2 again, so that the temporary runner channel, formed by the resin that flowed through the channel part, has thus been eliminated again.

The air-tight covering 3, as illustrated by Figs. 1b and 1c, preferably has such elastic properties that it can be sucked into the channel part 7 by extracting the air from the channel part 7 until the low pressure d2 prevails in it.

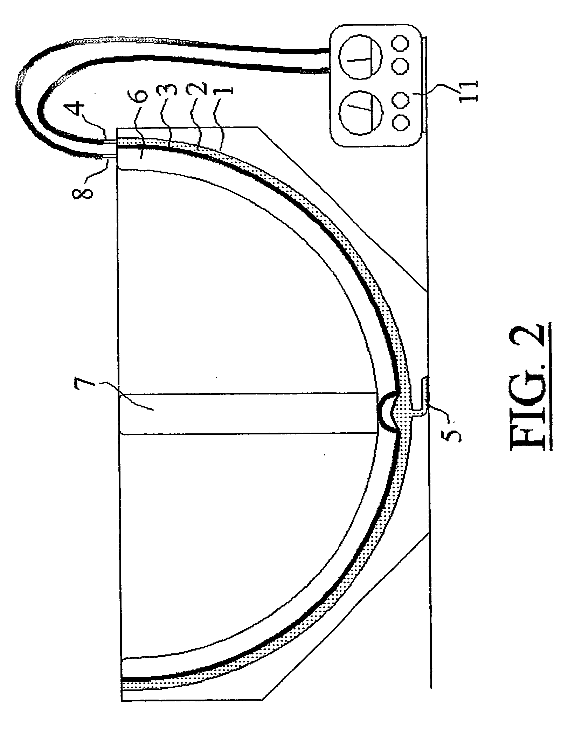

Fig. 2 shows an exemplary embodiment of a method according to the invention. Schematically shown is an outer mold for, for instance, a boat hull. Against the molding wall 1 of the mold, a reinforcement package in the form of a glass fiber package 2 is laid, which is covered by a preformed air-tight covering 3 of elastic material, provided with channel parts 7 non-detachably fixed thereon. The pressure in the space 2 in which the glass fiber package 2 is situated and within the channel parts 7, respectively, can be controlled by the pump system 11 connected to those spaces.

The preformed air-tight covering 3 can be manufactured in the following manner. A starting material, for instance a mixture of liquid polyurethane resin with hardener, is applied - that is, before the glass fiber package 2 is inserted - against the inside (provided with a detaching agent) of the molding wall 1, for instance by spraying. The polyurethane resin and the hardener enter into a chemical bond, resulting in a molded piece of elastic material which is modeled according to the shape of the molding wall 1 to serve subsequently as air-tight covering 3 of the glass fiber package 2 which - after manufacture of that air-tight covering inclusive of channel parts - is placed against the molding wall 1.

During or after the application of the liquid polyurethane layer against the molding wall 1, at those points where such is deemed necessary, channel parts 7 are provided, which are manufactured from sufficiently flexible material and glued onto the preformed air-tight covering 3. The different subchannel parts are mutually glued together air-tightly. Gluing those channel parts can be carried out, for instance, by pressing those channel parts 7 by their glue surfaces 10 (see Fig. 1) against or into the as yet uncured polyurethane resin and, if desired, additionally covering the channel parts with a (thin) layer of polyurethane resin. Accordingly, what is obtained as a result of all this is a premodeled air-tight covering 3, inclusive of channel parts 7 connected (or integrated) therewith, which can subsequently serve for the actual manufacture of the product, for instance a boat hull (Fig. 2). After the reinforcement package 2 and the preformed air-tight covering 3, inclusive of the channel parts 7, have been laid in the mold (Fig. 2), the course of the process is as has been set out hereinabove with reference to Figs. 1a-d.

It is noted that especially in the manufacture of larger products, it may be desirable to be able to steer the resin flows in the different runner channels individually or per group, by providing control or shutoff valves in different (main) runner channels. What can thereby be prevented, for instance, is that flow seams are formed at points where such is unwanted. Through mutual adjustment of the flows (volume, velocity) in the different runner channels, such flow seams and other inhomogeneities and the like can be controlled better.

Finally, it is noted that in practice it is preferred not to install the resin supply opening 5 on the side of the molding wall 1, so that the throughflow of the liquid resin is impeded to some extent by the reinforcement package 2. It is better to supply the starting material (the resin) 6 via one or more supply lines terminating between the air-tight covering 3 and the reinforcement package 2, at places that are bridged by a channel part 7. The respective channel part 7 will then fill up directly - especially after the channel part has been evacuated (d2), so that the air-tight covering 3 has been sucked into the channel part - in the longitudinal direction thereof and after this (and partly concurrently) fill the underlying reinforcement package 2.

It will be evident that within the framework of the invention as laid down in the appended claims, many more modifications and variants are possible. Thus, separately controllable runner channels have been mentioned. It is naturally also possible, instead, or in combination therewith, to provide several supplies, which also holds for the extraction. Also, with a premodeled air-tight covering, it is possible by virtue of the elasticity thereof to permit deviating configurations, such as rims, ribs, small channels, stiffenings, and the like.

## Claims

1. A method for the manufacture of a reinforced plastic product, comprising:
- providing a molding wall (1);
- placing a reinforcement package (2) against the molding wall;
- installing a supply (5) for liquid plastic material and an extraction (8) for creating a reduced pressure;
- arranging over the supply, the extraction and a surface of the reinforcement package remote from the molding wall an air-tight covering (3) with provisions to enable the creation, by local deformation of the air-tight covering, of channels between the air-tight covering and the reinforcement package on the side thereof remote from the molding wall;
- adjusting the pressure in a space between the molding wall and the air-tight covering to a first value, lower than that of the ambient pressure, for creating a reduced pressure in the reinforcement package;
- adjusting the pressure in a space between the provisions and the air-tight covering (3) to a second value, lower than the first value, for creating the channels outside the circumference of the air-tightly covered reinforcement package;
- supplying the liquid plastic material via the supply (5) and the channels for soaking and thereby filling up the reinforcement package with the plastic material;
- adjusting the pressure in the space between the provisions and the air-tight covering to a third value, higher than or equal to the first value, for pushing away the plastic material-filled channels created outside the air-tightly covered reinforcement package;
- allowing the plastic material to cure;
- removing the air-tight covering (3) and the provisions; and
- taking the molded plastic product from the molding wall,
**characterized in that**
the provisions are designed as at least one branched or unbranched gutter-shaped channel part (7), which, with an open gutter side facing the air-tight covering, is non-detachably fixed thereto.

2. A method according to claim 1, wherein by adjusting the pressure to the second value, at least one runner channel is formed with a total open gutter-side surface that is less than half of the surface of the reinforcement package.

3. A method according to claim 1 or 2, wherein the surface of the reinforcement package (2) not to be directly covered by the at least one runner channel (7) is at least twice as great as the surface of the reinforcement package to be covered directly by the at least one runner channel.

4. A method according to any one of the preceding claims, wherein at least two runner channels (7) are present, which, as regards the supply of the plastic material, are separately controllable.

5. A method according to any one of the preceding claims, wherein after the curing of the plastic material, the air-tight covering (3), together with the at least one channel part attached to it, is removed in one piece from the plastic product.

6. A method according to any one of the preceding claims, wherein the air-tight covering (3) inclusive of the at least one branched or unbranched channel part non-detachably fitted thereto is premodeled according to the shape of the molding wall.

7. A method according to claim 6, wherein a layer of more or less liquid starting material, which after curing forms an elastic material, is applied to the molding wall, and before, during or after curing of that layer of starting material, the at least one channel part is connected therewith, after which the cured layer of starting material, together with the at least one channel part non-detachably connected therewith, is taken off the molding wall to be subsequently used as an elastic, premodeled, air-tight covering of the reinforcement package.

8. An air-tight covering (3) for use in a method according to any one of the preceding claims, which is manufactured from a layer of elastic material, which permits reuse of the air-tight covering, and on which, non-detachably connected therewith, at least one gutter-shaped channel (7) part, with an open gutter side facing the layer, is non-detachably fixed, the at least one channel part being manufactured from a material having a higher stiffness than the material of the layer.

9. An air-tight covering according to claim 8, wherein the layer and the at least one channel part non-detachably connected therewith are preformed according to a wall surface of the plastic product to be molded.

## Patentansprüche

1. Verfahren zur Herstellung eines verstärkten Kunststoffprodukts, mit:
- Bereitstellen einer Formwerkzeug-Wand (1);
- Anordnen eines Verstärkungskörpers (2) gegen die Formwerkzeug-Wand;
- Installieren einer Zuführung (5) für flüssiges Kunststoffmaterial und eines Extraktionsmittels (8) zum Erzeugen eines verminderten Drucks;
- Anordnen einer luftdichten Abdeckung (3) über der Zuführung, dem Extraktionsmittel und einer Fläche des Verstärkungskörpers entfernt von der Formwerkzeug-Wand, die Einrichtungen beinhaltet, um durch lokale Verformung der luftdichten Abdeckung das Erzeugen von Kanälen zwischen der luftdichten Abdeckung und dem Verstärkungskörper an der Seite davon zu ermöglichen, die von der Formwerkzeug-Wand entfernt ist;
- Einstellen des Drucks in einem Raum zwischen der Formwerkzeug-Wand und der luftdichten Abdeckung auf einen ersten Wert, der geringer ist als der des Umgebungsdrucks, um in dem Verstärkungskörper einen verminderten Druck zu erzeugen;
- Einstellen des Drucks in einem Raum zwischen den Einrichtungen und der luftdichten Abdeckung (3) auf einen zweiten Wert, der geringer ist als der erste Wert, um die Kanäle außerhalb des Umfangs des luftdicht abgedeckten Verstärkungskörpers zu erzeugen;
- Zuführen des flüssigen Kunststoffmaterials über die Zuführung (5) und die Kanäle, um den Verstärkungskörper mit dem Kunststoffmaterial zu durchtränken und **dadurch** aufzufüllen;
- Einstellen des Drucks in dem Raum zwischen den Einrichtungen und der luftdichten Abdeckung auf einen dritten Wert, der größer oder gleich dem ersten Wert ist, um die mit Kunststoffmaterial gefüllten Kanäle wegzudrücken, die außerhalb des luftdicht abgedeckten Verstärkungskörpers erzeugt sind;
- Ermöglichen, dass das Kunststoffmaterial aushärtet;
- Entfernen der luftdichten Abdeckung (3) und der Einrichtungen; und
- Abnehmen des geformten Kunststoffprodukts von der Formwerkzeug-Wand;
**dadurch gekennzeichnet, dass**
die Einrichtungen als mindestens ein verzweigtes oder unverzweigtes, rinnenförmiges Kanalelement (7) ausgestaltet sind, das, wobei eine offene Rinnenseite der luftdichten Abdeckung zugewandt ist, unlösbar daran befestigt ist.

2. Verfahren nach Anspruch 1, bei dem durch Einstellen des Drucks auf den zweiten Wert zumindest ein Gusskanal mit einer vollständig offenen Rinnenseitenfläche gebildet wird, die kleiner ist als die Hälfte der Fläche des Verstärkungskörpers.

3. Verfahren nach Anspruch 1 oder 2, bei dem die Fläche des Verstärkungskörpers (2), die nicht direkt durch den mindestens einen Gusskanal (7) bedeckt ist, mindestens zweimal so groß ist wie die Fläche des Verstärkungskörpers, die direkt durch den zumindest einen Gusskanal abgedeckt ist.

4. Verfahren nach einem der vorhergehenden Ansprüche, bei dem zumindest zwei Gusskanäle (7) vorsehen sind, die hinsichtlich der Zufuhr des Kunststoffmaterials getrennt steuerbar sind.

5. Verfahren nach einem der vorhergehenden Ansprüche, bei dem, nach dem Aushärten des Kunststoffmaterials, die luftdichte Abdeckung (3) zusammen mit dem mindestens einen Kanalelement, das daran angebracht ist, als ein Teil von dem Kunststoffprodukt entfernt wird.

6. Verfahren nach einem der vorhergehenden Ansprüche, bei dem die luftdichte Abdeckung (3) einschließlich des mindestens einen verzweigten oder unverzweigten Kanalelements, das unlösbar daran befestigt ist, entsprechend der Form der Formwerkzeug-Wand vorgeformt ist.

7. Verfahren nach Anspruch 6, bei dem eine Schicht aus mehr oder weniger flüssigem Anfangsmaterial, das nach dem Aushärten ein elastisches Material bildet, der Formwerkzeug-Wand zugeführt wird, und vor, während oder nach dem Aushärten dieser Schicht des Anfangsmaterials das mindestens eine Kanalelement damit verbunden ist, wonach die gehärtete Schicht des Anfangsmaterials zusammen mit dem mindestens einen Kanalelement, das unlösbar damit verbunden ist, von der Formwerkzeug-Wand abgenommen wird, um anschließend als eine elastische, vorgeformte, luftdichte Abdeckung der Verstärkungskörpers verwendet zu werden.

8. Luftdichte Abdeckung (3) zur Verwendung bei einem Verfahren gemäß einem der vorhergehenden Ansprüche, die aus einer Schicht aus elastischem Material hergestellt ist, die die Wiederverwendung der luftdichten Abdeckung ermöglicht, und an der, unlösbar damit verbunden, mindestens ein rinnenförmiges Kanalelement (7), wobei eine offene Rinnenseite der Schicht zugewandt ist, unlösbar befestigt ist, wobei das mindestens eine Kanalelement aus einem Material hergestellt ist, das eine höhere Steifigkeit hat als das Material der Schicht.

9. Luftdichte Abdeckung nach Anspruch 8, bei der die Schicht und das mindestens eine Kanalelement, das unlösbar damit verbunden ist, entsprechend einer Wandfläche des zu formenden Kunststoffprodukts vorgeformt sind.

## Revendications

1. Procédé de fabrication d'un produit en matière plastique renforcée, consistant à :
- fournir une paroi de moulage (1),
- placer un conditionnement de renforcement (2) contre la paroi de moulage,
- installer une alimentation (5) de matière plastique liquide et une extraction (8) pour créer une pression réduite,
- agencer au-dessus de l'alimentation, de l'extraction et d'une surface du conditionnement de renforcement éloignée de la paroi de moulage un recouvrement étanche à l'air (3) ayant des agencements pour permettre la création, par déformation locale du recouvrement étanche à l'air, de canaux entre le recouvrement étanche à l'air et le conditionnement de renforcement sur le côté de celui-ci éloigné de la paroi de moulage,
- ajuster la pression dans un espace existant entre la paroi de moulage et le recouvrement étanche à l'air à une première valeur, plus faible que celle de la pression ambiante, pour créer une pression réduite dans le conditionnement de renforcement,
- ajuster la pression dans un espace existant entre les agencements et le recouvrement étanche à l'air (3) à une deuxième valeur, plus faible que la première valeur, pour créer les canaux à l'extérieur de la circonférence du conditionnement de renforcement recouvert de manière étanche à l'air,
- alimenter la matière plastique liquide via l'alimentation (5) et les canaux pour immerger et par conséquent remplir le conditionnement de renforcement à l'aide de la matière plastique,
- ajuster la pression dans l'espace entre les agencements et le recouvrement étanche à l'air à une troisième valeur, plus élevée ou égale à la première valeur, pour repousser les canaux remplis de matière plastique créés à l'extérieur du conditionnement de renforcement recouvert de manière étanche à l'air,
- laisser la matière plastique durcir,
- enlever le recouvrement étanche à l'air (3) et les agencements, et
- enlever le produit en matière plastique de la paroi de moulage,
**caractérisé en ce que**
les agencements sont conçus comme au moins une partie de canal en forme de gouttière ramifiée ou non-ramifiée (7) qui, ayant un côté de gouttière ouvert en vis-à-vis du recouvrement étanche à l'air, est fixée de manière non-séparable sur celui-ci.

2. Procédé selon la revendication 1, dans lequel en ajustant la pression à la deuxième valeur, au moins un canal d'alimentation est formé ayant une surface totale de côté de gouttière ouvert qui est plus petite que la moitié de la surface du conditionnement de renforcement.

3. Procédé selon la revendication 1 ou 2, dans lequel la surface du conditionnement de renforcement (2) qui n'est pas à recouvrir directement par le au moins un canal d'alimentation (7) est au moins deux fois aussi grande que la surface du conditionnement de renforcement à recouvrir directement par le au moins un canal d'alimentation.

4. Procédé selon l'une quelconque des revendications précédentes, dans lequel au moins deux canaux d'alimentation (7) sont présents qui, en ce qui concerne l'alimentation de la matière plastique, peuvent être commandés séparément.

5. Procédé selon l'une quelconque des revendications précédentes, dans lequel après le durcissement de la matière plastique, le recouvrement étanche à l'air (3) associé à la au moins une partie de canal fixée sur celui-ci, est enlevé en une seule pièce du produit en matière plastique;

6. Procédé selon l'une quelconque des revendications précédentes, dans lequel le recouvrement étanche à l'air (3) y compris la au moins une partie de canal ramifiée ou non-ramifiée agencée de manière non-séparable sur celui-ci est prémodelé conformément à la forme de la paroi de moulage.

7. Procédé selon la revendication 6, dans lequel une couche de matériau de départ plus ou moins liquide, qui après durcissement forme un matériau élastique, est appliquée sur la paroi de moulage, et auparavant, pendant ou après le durcissement de cette couche de matériau de départ, la au moins une partie de canal est reliée à celle-ci, après quoi la couche durcie de matériau de démarrage, associée à la au moins une partie de canal reliée de manière non-séparable à celle-ci, est enlevée de la paroi du moule pour être par la suite utilisée en tant que recouvrement élastique, prémodelé, étanche à l'air du conditionnement de renforcement.

8. Recouvrement étanche à l'air (3) destiné à être utilisé dans un procédé selon l'une quelconque des revendications précédentes, qui est fabriqué à partir d'une couche de matériau élastique, qui permet une réutilisation du recouvrement étanche à l'air, et sur lequel, reliée de manière non-séparable à celle-ci, au moins une partie de canal en forme de gouttière (7), ayant un côté de gouttière ouvert en vis-à-vis de la couche, est fixée de manière non-séparable, la au moins une partie de canal étant fabriquée à partir d'un matériau ayant une rigidité plus élevée que le matériau de la couche.

9. Recouvrement étanche à l'air selon la revendication 8, dans lequel la couche et la au moins une partie de canal reliée de manière non-séparable à celle-ci sont préformées conformément à une surface de paroi du produit en matière plastique à mouler.
